(19) Europäisches Patentamt / European Patent Office / Office européen des brevets

(11) EP 3 933 674 A1

(12) **EUROPEAN PATENT APPLICATION**

(43) Date of publication:
05.01.2022 Bulletin 2022/01

(21) Application number: 21161716.2

(22) Date of filing: 10.03.2021

(51) Int Cl.:
$G06K\ 9/00^{(2006.01)}$      $G06K\ 9/32^{(2006.01)}$
$G06K\ 9/62^{(2006.01)}$      $G06T\ 7/20^{(2017.01)}$
$G06T\ 7/11^{(2017.01)}$      $G06T\ 7/246^{(2017.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.06.2020 CN 202010613379

(71) Applicant: **Beijing Baidu Netcom Science and Technology Co., Ltd.**
**Beijing 100085 (CN)**

(72) Inventors:
• **ZHANG, Chengquan**
**Haidian**
**Beijing 100085 (CN)**
• **HE, Bin**
**Haidian**
**Beijing 100085 (CN)**

(74) Representative: **Richly & Ritschel Patentanwälte PartG mbB**
**Sattlerweg 20**
**51429 Bergisch Gladbach (DE)**

(54) **METHOD, APPARATUS, DEVICE, STORAGE MEDIUM AND PROGRAM FOR PROCESSING IMAGE**

(57)     The present disclosure provides a method, apparatus, device and storage medium for processing an image, and relates to the fields of artificial intelligence, deep learning, computer vision and large data. A specific implementation solution is: acquiring a target video including a target image frame and at least one image frame of a labeled target object; based on the labeled target object in the at least one image frame, determining a search area for the target object in the target image frame; based on the search area, determining center position information of the target object; based on a labeled area in which the target object is located and the center position information, determining a target object area; and based on the target object area, segmenting the target image frame. This implementation method can robustly locate the target object and provide a fine target segmentation result.

Fig. 1

EP 3 933 674 A1

**Description**

TECHNICAL FIELD

The present disclosure relates to the field of image processing, in particular, to the fields of artificial intelligence, deep learning and computer vision, and more in particular, to a method, apparatus, device, storage medium and program for processing an image.

BACKGROUND

With the popularization and development of smart phones and mobile Internet, the cost of video production and transmission is continuously reduced. Video is favored by more and more users in the field of content generation due to its rich performance capabilities, and the need for easy-to-use automated video editing technology is getting bigger. In recent years, video target segmentation, which is closely related to target tracking, has attracted more and more attention. However, existing target tracking methods often fail to provide fine target segmentation results.

SUMMARY

The present disclosure provides a method, apparatus, device and storage medium for processing an image.

According to a first aspect of the present disclosure, a method for processing an image is provided, and the method includes: acquiring a target video including a target image frame and at least one image frame of a labeled target object; based on the labeled target object in the at least one image frame, determining a search area for the target object in the target image frame; based on the search area, determining center position information of the target object; based on a labeled area in which the target object is located and the center position information, determining a target object area; and based on the target object area, segmenting the target image frame.

According a second aspect of the present disclosure, an apparatus for processing an image is provided, and the apparatus includes: a video acquisition unit configured to acquire a target video including a target image frame and at least one image frame of a labeled target object; a search area determining unit configured to, based on the labeled target object in the at least one image frame, determine a search area for the target object in the target image frame; a center position information determining unit configured to, based on the search area, determine center position information of the target object; a target object area determining unit configured to, based on a labeled area in which the target object is located and the center position information, determine a target object area; and a segmentation unit configured to, based on the target object area, segment the target image frame.

According to a third aspect of the present disclosure, an electronic device for processing an image is provided, and the electronic device includes: at least one processor; and a memory communicating with the at least one processor, where the memory stores instruction executable by the at least one processor, and the instructions, when executed by the at least one processor, cause the at least one processor to execute the method for processing the image.

According to a fourth aspect of the present disclosure, a non-transitory computer readable storage medium storing computer instructions is provided, and the computer instructions cause a computer to execute the method for processing the image.

According to a fifth aspect of the present disclosure, a computer program is provided, and the computer program, when executed by a computer, causes the computer to perform the method as described in any of the implementations of the first aspect.

The technique according to the present disclosure solves the problem that an existing target tracking method often cannot provide a fine target segmentation result, and can robustly locate the target object and provide a fine target segmentation result.

It should be appreciated that the content described in this section is not intended to identify the key or critical features of the embodiments of the present disclosure, nor is it intended to limit the scope of the present disclosure. The other features of the present disclosure will become easy to understand through the following description.

BRIEF DESCRIPTION OF THE DRAWINGS

The accompanying drawings are intended to provide a better understanding of the present disclosure and do not constitute a limitation to the present disclosure.

Fig. 1 is an example system architecture diagram in which an embodiment of the present disclosure may be applied;

Fig. 2 is a flowchart of an embodiment of a method for processing an image according to the present disclosure;

Fig. 3 is a schematic diagram of an application scenario of the method for processing the image according to the present disclosure;

Fig. 4 is a flowchart of another embodiment of the method for processing the image according to the present disclosure;

Fig. 5 is schematic structural diagram of an embodiment of an apparatus for processing the image according to the present disclosure; and

Fig. 6 is a block diagram of an electronic device for implementing the method for processing the image of an embodiment of the present disclosure.

DETAILED DESCRIPTION OF EMBODIMENTS

Example embodiments of the present disclosure are described below in combination with the accompanying drawings, where various details of the embodiments of the present disclosure are included to facilitate understanding and should be considered as examples only. Therefore, those of ordinary skill in the art should realize that various changes and modifications may be made to the embodiments described herein without departing from the scope and spirit of the present disclosure. Similarly, for clarity and conciseness, descriptions of well-know functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

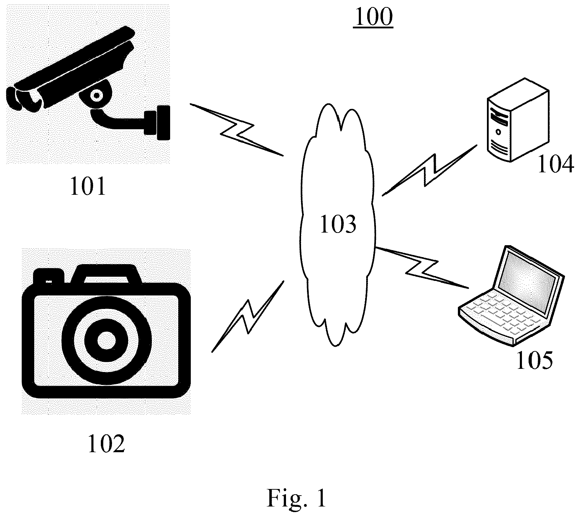

Fig. 1 shows an example system architecture 100 in which an embodiment of a method or an apparatus for processing an image of the present disclosure may be applied.

As shown in Fig. 1, the system architecture 100 may include cameras 101, 102, a network 103, a server 104 and a terminal device 105. The network 103 serves as a medium providing a communication link between the cameras 101, 102 and the server 104. The networks 103 may include various types of connections, such as wired or wireless communication links, or optical fiber cables.

The cameras 101, 102 may interact with the server 104 and the terminal device 105 through the network 103 to receive or send messages. The cameras 101, 102 may capture a video and send the captured video to the server 104 or the terminal device 105, or may be stored locally. The cameras 101, 102 may be fixed to a streetlight pole, a traffic light pole, a film shooting support pole, or a shooting support pole provided in a sports field to shoot a video or an image.

The server 104 or the terminal device 105 may acquire a captured video or image from the cameras 101, 102 and process the video or image to track and segment a target object in the video or image. Various communication client applications, such as image processing applications, may be installed on the server 104 or the terminal device 105.

The terminal device 105 may be hardware or software. When the terminal device 105 is hardware, it may be various electronic devices, including but not limited to, a smart phone, a tablet computer, an electronic book reader, an onboard computer, a laptop portable computer, a desktop computer and the like. When the terminal device 105 is software, it may be installed in the electronic device. The software may be implemented as multiple software pieces or software modules (such as for providing distributed services), or as a single software piece or software module, which is not specifically limited herein.

It should be noted that the method for processing the image provided by the embodiments of the present disclosure is generally executed by the server 104 or the terminal device 105. Correspondingly, the apparatus for processing the image is generally provided in the server 104 or the terminal device 105.

It should be appreciated that the number of the cameras, the network, the server and the terminal device in Fig. 1 is merely illustrative. Any number of cameras, networks, servers and terminal devices may be provided based on actual requirements.

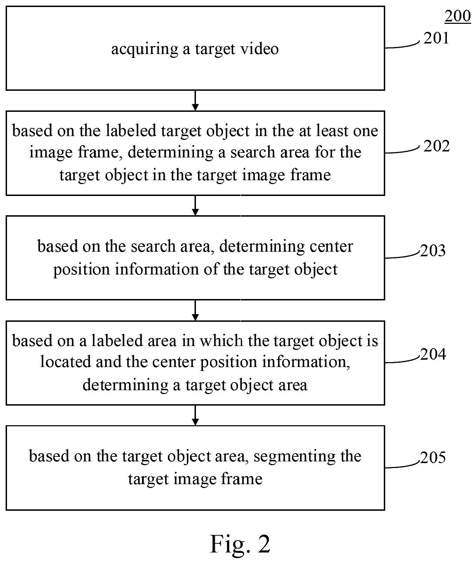

Further referring to Fig. 2, a flow 200 of an embodiment of a method for processing an image according to the present disclosure is shown. The method includes the following steps 201 to 205.

Step 201 includes acquiring a target video.

In this embodiment, the execution body for processing the image (such as the server 104 shown in Fig. 1) may acquire the target video through a wired or a wireless connection. The target video may be captured in real time by a camera or may be acquired from other electronic devices. The target video may include a target image frame and at least one image frame of a labeled target object. The image frame includes information such as a contour and a shape of the target object. Labeling the target object may be labeling the contour of the target object. The labeled target object may be a person, a vehicle or the like.

Step 202 includes, based on the labeled target object in the at least one image frame, determining a search area for the target object in the target image frame.

After obtaining the target image frame and the at least one image frame of the labeled target object in the target video, the execution body may determine the search area for the target object in the target image frame based on the labeled target object in the at least one image frame. Specifically, the execution body may use a circular area as the search area for the target object in the target image frame, the circular area being obtained by using the position of the target object in the previous frame of the target image frame as the center of the circle and using the moving distance of the target object in the previous two frames of the target image frame as the radius. For example, in order to determine the search area for the target object in the n-th image frame, a circular area, obtained by using the position of the target object in the (n-1)-th image frame as the circle center and using the moving distance L of the target object from the (n-2)-th image frame to the (n-1)-th image frame as the radius, is used as the search area for the target object in the target image frame.

Step 203 includes, based on the search area, determining center position information of the target object.

After obtaining the search area for the target object in the target image frame, the execution body may determine the center position information of the target object based on the search area. Specifically, the execution body may predict the moving direction of the target object from the previous frame to the target image frame based on the center position information of the target object in the previous frame and the moving direction reflected by the moving trajectory of the target object in the previous two frames. For example, in the determined moving direction, based on the moving distance L of the target object from the (n-2)-th image frame to the (n-1)-th image frame and the center position of the target object in the previous frame (that is, in the (n-1)-th image frame), obtaining the center position information of the target object in the search area includes: in the determined moving direction, using the center position of the target object in the (n-1)-th image frame as the starting point, using as the end point the position of the target object after the target object moves distance L from the starting point, and determining the end point as the center position of the target object in the search area.

Step 204 includes, based on a labeled area in which the target object is located and the center position information, determining a target object area.

After obtaining the center position information of the target object, the execution body may determine the target object area based on the labeled area in which the target object is located and the center position information. Using a contour size of the target object of the previous frame as a standard, and using the center position of the target object in the target image frame as a center, a contour of the target object with a size equal to the contour size of the target object of the previous frame is created and determined in the search area as the to-be-segmented target object area.

Step 205 includes, based on the target object area, segmenting the target image frame.

After obtaining the target object area, the execution body may segment the target image frame based on the target object area. Specifically, the execution body may extract the target object indicated by the target object area in the target image frame through the target recognition or the semantic segmentation method, thereby achieving segmentation of the target image frame. Segmentation refers to separating the contour of the target object from the target image frame.

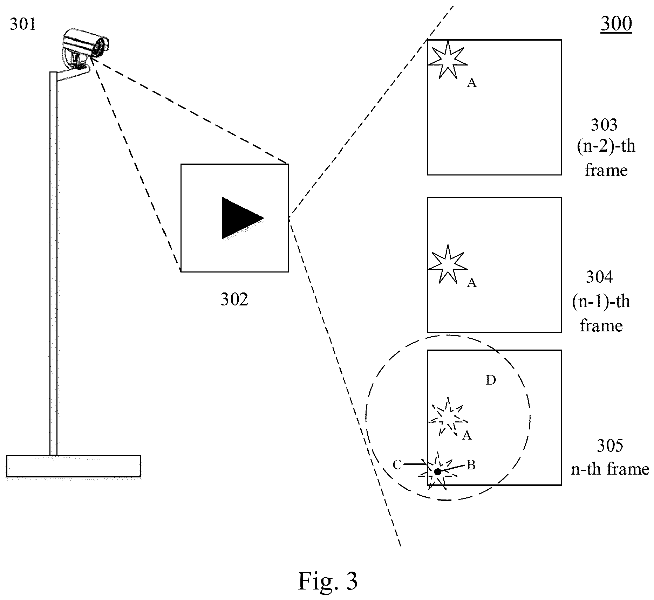

Further referring to Fig. 3, a schematic diagram of an application scenario of the method for processing the image according to the present disclosure is shown. In the application scenario of Fig. 3, the camera 301 is fixed to the shooting pole for capturing the video 302. The video 302 captured by the camera 301 includes a target image frame, i.e., the n-th frame 305, and at least one image frame of the labeled target object A, i.e., the (n-2)-th frame 303 and the (n-1)-th frame 304. After a laptop portable computer (not shown in the figures) acquires the target video 302 from the camera 301, the search area D enclosed by the dotted line for the target object A in the n-th frame 305 is determined based on the (n-2)-th frame 303 and the (n-1)-th frame 304 of the labeled target object A. The laptop portable computer (not shown in the figures) determines information of the center position B of the target object A based on the search area D, determines the target object area C based on the labeled area of the (n-2)-th frame 303 or the (n-1)-th frame 304 and the center position B, and segments the target object coinciding with the target object area C in the n-th frame 305 based on the target object area C.

This embodiment can robustly locate the target object and provide a fine target segmentation result.

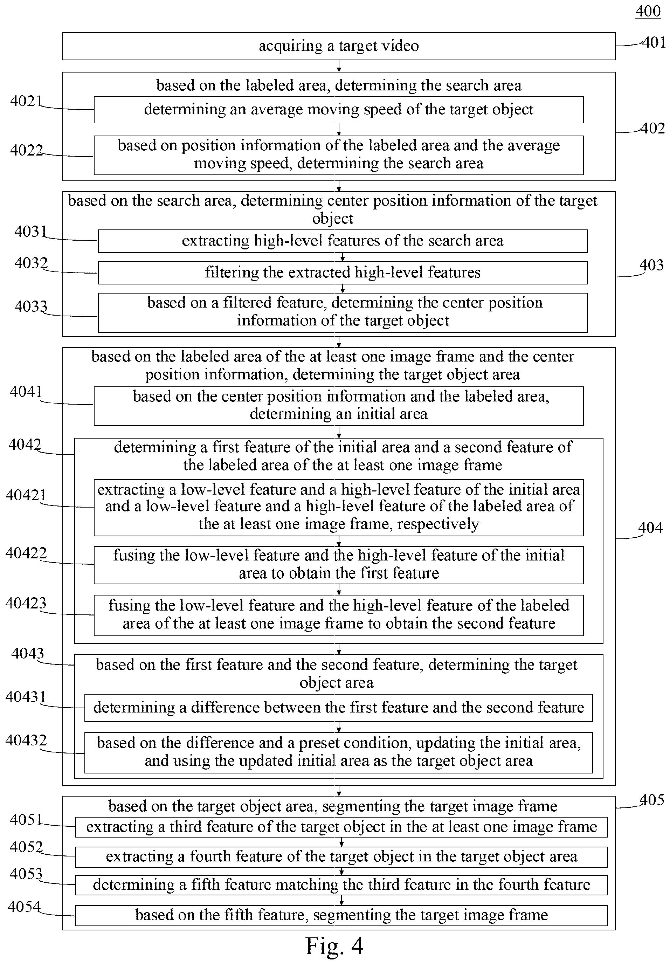

Further referring to Fig. 4, a flow 400 of another embodiment of the method for processing the image according to the present disclosure is shown. As shown in Fig. 4, the method for processing the image of this embodiment may include the following steps 401 to 405.

Step 401 includes acquiring a target video.

The principle of step 401 is similar to that of step 201, and details are not described herein.

Step 402 includes, based on the labeled area, determining the search area.

In this embodiment, after acquiring the target video, the execution body may determine the search area based on the labeled area. Specifically, the execution body may use the average value of the sum of the moving distances of the target object in the previous three frames of the target image frame as the search radius, use the center position of the target object of the previous frame as the start point, connect the start point and the search radius, and use the sector-shaped search area formed in the traveling direction as the search area in the target image frame, so that the search area can be accurately determined, thereby more accurately achieving the segmentation of the target object. The traveling direction may be a direction within an included angle between the moving directions of the target object determined based on the previous image frames.

Specifically, step 402 may be determined through the following steps 4021 to 4022.

Step 4021 includes determining an average moving speed of the target object.

After obtaining the target image frame and the at least one image frame of the labeled target object in the target video, the execution body may determine the average moving speed of the target object. For example, the execution body uses the n-th image frame as the target image frame, and the execution body can calculate the target moving speed of each adjacent two frames based on the target object position change distance of each adjacent two frames and the preset time of each frame in the images of the previous m frames, and sum and average the obtained target moving speeds for each adjacent two frames in the images of the previous m frames to obtain the target moving speed of the target object in the images of the previous m frames, which is used as the average moving speed of the target object in the image of the n-th frame (that is, the target image frame).

Step 4022 includes, based on position information of the labeled area and the average moving speed, determining the search area.

After obtaining the average moving speed of the target object, the execution body may determine the search area based on the position information of the target object in the at least one image frame and the average moving speed. For example, the execution body determines the n-th image frame as the target image frame. A search center is determined based on the center position of the target object in the (n-1)-th image frame, a search radius is determined based on the average moving speed of the target object in the previous (n-1) image frames, and an area formed by the search center and the search radius is determined as a search area of the n-th image frame. It should be appreciated that the center area of the target object in the (n-1)-th image frame may be determined through the labeled target object in the first image frame. For example, the center area of the target object in the third image frame may be determined through the center area of the target object in the second image frame, and the center area of the target object in the second image frame may be determined through the center area of the determined target object in the first image frame, and the feature, position and contour of the target object in the first image frame may be manually labeled. The feature of the target object may be a low-level feature, such as a color or an edge, or may be a high-level feature, such as a texture, a distinguishing feature (such as a cow head or a dog head) or a discriminative key feature (such as a human or an animal).

In this embodiment, the search area is determined based on the position information of the target object in the at least one image frame and the average moving speed, so that the search area can be more accurately determined and the tracking accuracy of the target object can be improved.

Step 403 includes, based on the search area, determining center position information of the target object.

The principle of step 403 is similar to that of step 203, and details are not described herein.

Specifically, step 403 may be determined through the following steps 4031 to 4033.

Step 4031 includes extracting high-level features of the search area.

After obtaining the search area, the execution body may extract the high-level features of the search area. Specifically, the high-level features may be a texture feature, such as a mesh texture; may be a distinguishing feature, such as a dog head, a human head or a cow head; or may be a discriminative key feature, such as a human or an animal.

Step 4032 includes filtering the extracted high-level features.

After extracting the high-level features of the search area, the execution body may filter the extracted high-level features. Specifically, filtering the extracted high-level features may alter or enhance the extracted features, and some particularly important features, such as textures or types of the high-level features may be extracted by filtering, or features that are not important, such as colors or contours in the low-level features, may be removed. The filtering in this embodiment may extract a high-level feature in the search area of the target image frame based on a high-level feature at the center position in the labeled area of the at least one image frame, the extracted high-level feature being the same as or particularly similar to the high-level feature at the center position in the labeled area of the at least one image frame.

Step 4033 includes, based on a filtered feature, determining the center position information of the target object.

After filtering the extracted high-level features, the execution body may determine the center position information of the target object based on the filtered feature. Specifically, the execution body may determine the position of the high-level feature in the search area, which is obtained by filtering and is the same as or particularly similar to the high-level feature at the center position in the labeled area of the at least one image frame, as the center position of the target object.

This embodiment may enhance the extracted high-level features by filtering the extracted high-level features, thereby improving the accuracy of using the high-level features to determine the center position information of the target object.

Step 404 includes, based on the labeled area of the at least one image frame and the center position information, determining the target object area.

The principle of step 404 is similar to that of step 403, and details are not described herein.

Specifically, step 404 may be determined through the following steps 4041 to 4043.

Step 4041 includes, based on the center position information and the labeled area, determining an initial area.

After obtaining the center position information of the target object, the execution body may determine the initial area based on the center position information and the labeled area. Specifically, the execution body may form the initial area by using the center position of the target object and the contour feature labeling the target object in the at least one image frame. Alternatively, the execution body may determine the area having any shape and size and surrounding the center position of the target object as the initial area, and the shape and size of the initial area are not specifically limited in the present disclosure.

Step 4042 includes determining a first feature of the initial area and a second feature of the labeled area of the at least one image frame.

After obtaining the initial area, the execution body may determine the first feature of the initial area and the second feature of the labeled area of the at least one image frame. Specifically, after obtaining the initial area, the execution body may extract a high-level feature in the initial area as the first feature of the initial area, and extract a high-level feature of the labeled area of the at least one image frame as the second feature of the labeled area of the at least one image frame. After obtaining the initial region area, the execution body may alternatively extract a low-level feature in the initial area as the first feature of the initial area, and extract a low-level feature of the labeled area of the at least one image frame as the second feature of the labeled area of the at least one image frame. Specifically, the high-level feature is a relatively distinguishing and relatively discriminative feature, for example, may be a texture feature such as a mesh texture, a cat head, a dog head, a human or an animal. The low-level feature may be, for example, a color, a contour or the like.

Specifically, step 4042 may alternatively be determined through the following steps 40421 to 40423.

Step 40421 includes extracting a low-level feature and a high-level feature of the initial area and a low-level feature and a high-level feature of the labeled area of the at least one image frame, respectively.

The execution body may extract the low-level feature and the high-level feature of the initial area and the low-level feature and the high-level feature of the labeled area of the at least one image frame through a pre-trained residual neural network ResNext50. The pre-trained residual neural network ResNet50 may extract deeper features, thereby making the determination of the center position of the target object more accurate. Specifically, the semantic information of a low-level feature is few, but the position of the target corresponding to the low-level feature is accurate. The semantic information of a high-level feature is rich, but the position of the target corresponding to the high-level feature is rough. A high-level feature representing a detail may be a texture feature such as a mesh texture, a cat head, a dog head, a human or an animal. A low-level feature representing a semantic feature may be a feature such as a color or a contour.

Step 40422 includes fusing the low-level feature and the high-level feature of the initial area to obtain the first feature.

The execution body may fuse the low-level feature and the high-level feature of the initial area through FPN (feature pyramid networks) to obtain the first feature. The FPN (feature pyramid networks) is a method of efficiently extracting features of dimensions in a picture using a conventional CNN (convolutional neural networks) model. The FPN (Feature Pyramid Networks) algorithm uses both the high resolution of a low-level feature and the high-semantic information of a high-level feature to achieve segmentation by fusing the features of these different levels. And the segmentation is performed separately on each fused feature layer. Specifically, an input high-level feature of the initial area is x1 and the dimension size is $h1 \times w1 \times c1$. An input low-level feature of the initial area is x2 and the dimension size is $h2 \times w2 \times c2$, where $h1 \leq h2$ and $w1 \leq w2$. The high-level feature is first mapped to a common space through the vector convolution operation Conv1, and the bilinear interpolation is performed on the high-level feature such that the spatial dimension of the high-level is the same as the low-level feature, and then the low-level feature is mapped to the common space through the vector convolution operation Conv2, and finally the high-level feature and the low-level feature are summed to obtain the first feature. That is, the first feature is x=BilinearUpsample(Conv1(x1))+Conv2(x2).

Step 40423 includes fusing the low-level feature and the high-level feature of the labeled area of the at least one image frame to obtain the second feature.

The execution body may fuse the low-level feature and the high-level feature of the labeled area of the at least one image frame through FPN (feature pyramid networks) to obtain the second feature. The FPN (feature pyramid networks) is a method of efficiently extracting features of dimensions in a picture using a conventional CNN model. The FPN (Feature Pyramid Networks) algorithm uses both the high resolution of a low-level feature and the high-semantic information of a high-level feature to achieve segmentation by fusing the features of these different levels. And the segmentation is performed separately on each fused feature layer. Specifically, an input high-level feature of the labeled area of the at least one image frame is x3 and the dimension size is $h3 \times w3 \times c3$. An input low-level feature of the labeled area of the at least one image frame is x4 and the dimension size is $h4 \times w4 \times c4$, where $h3 \leq h4$ and $w3 \leq w4$. The high-

level feature is first mapped to a common space through the vector convolution operation Conv1, and the bilinear interpolation is performed on the spatial dimension of the high-level feature such that the spatial dimension of the high-level is the same as the low-level feature, and then the low-level feature is mapped to the common space through the vector convolution operation Conv2, and finally the high-level feature and the low-level feature are summed to obtain the second feature. That is, the second feature is

$$x = BilinearUpsample(Conv1(x3)) + Conv2(x4).$$

In this embodiment, the fusion of the low-level feature and the high-feature can enhance the regression ability of the execution body to predict the position and the contour of the target object. And the prediction of the position and the contour of the target object by the execution body may be performed separately on each feature layer fusing the high-level feature and the low-level feature, such that the predictions do not interfere each other, thereby improving the accuracy of the prediction of the execution body.

Step 4043 includes, based on the first feature and the second feature, determining the target object area.

After obtaining the first feature and the second feature, the execution body may determine the target object area based on the first feature and the second feature. Specifically, the execution body determines the direction of the moving gradient according to the overlapping degree between the first feature and the second feature, thereby determining the moving direction and the moving step length of the initial area until the first feature and the second feature obtained through the fusion are completely consistent, and the initial area in this case is determined as the target object area. The direction of the gradient refers to a direction in which the overlapping degree between the first feature and the second feature increase.

This embodiment can improve the accuracy of determining the target object area by comparing the first feature of the initial area with the second feature of the labeled area of the at least one image frame.

Specifically, step 4043 may be determined through the following steps 40431 to 40432.

Step 40431 includes determining a difference between the first feature and the second feature.

The second feature contains all features of the target object. After obtaining the fused first feature and the fused second feature, the execution body compares the first feature of the initial area with the second feature of the labeled area of the at least one image frame to obtain a feature included in the second feature and not included in the first feature. For example, the second feature includes color, contour, texture, and the first feature only include contour and color, but no texture, and thus the texture is the difference between the first feature and the second feature.

Step 40432 includes, based on the difference and a preset condition, updating the initial area, and using the updated initial area as the target object area.

After obtaining the difference between the first feature and the second feature, the execution body may predict the overlap ratio between the initial area and the labeled area of the at least one image frame through the overlap ratio prediction network, and the overlap ratio reflects the difference between the first feature and the second feature. The execution body updates the initial area based on the difference and the preset condition, and uses the updated initial area as the target object area. The difference between the first feature and the second feature may reflect the size of the overlap ratio of the initial area to the labeled area of the at least one image frame. The larger the difference is, the smaller the overlap ratio is; and the smaller the difference is, the larger the overlap ratio is. Specifically, the overlap ratio prediction network obtains a gradient of the initial area and the labeled area of the at least one image frame based on the position at which the difference between the first feature and the second feature is located, e.g., the position at which the texture is located, and the direction of the gradient is the direction in which the overlap ratio increases. The execution body moves the initial area in the direction of the gradient and acquires the overlap ratio between the first feature of the initial area and the second feature of the labeled area of the at least one image frame in real time. When the overlap ratio does not meet a preset condition (the preset condition may be 98% or 99%, and the preset condition is not specifically limited in the present disclosure), the execution body calculates a gradient of the acquired overlap ratio in real time through the overlap ratio prediction network. The execution body moves the initial area in the direction of the gradient based on the gradient, and updates information such as a position and a contour of the initial area in real time until the overlap ratio acquired by the execution body is maximized, and the updated initial area in this case is used as the target object area.

This embodiment may adjust the position and contour of the initial area by comparing the first feature of the initial area with the second feature of the labeled area of the at least one image frame, thereby maximizing the overlap between the first feature of the initial area and the second feature of the labeled area of the at least one image frame, thereby accurately determining the target object area.

Step 405 includes, based on the target object area, segmenting the target image frame.

After obtaining the target object area, the execution body may segment the target image frame based on the target object area. Specifically, the target object area is a rectangular area, and after the rectangular area is obtained, a square image area surrounding the rectangular area is determined based on the length and width of the rectangular area. For example, the length and width of the rectangular area are x and y, respectively. The side length of the square

is $\alpha\sqrt{xy}$, where $\alpha$ is a preset search range parameter, which is not specifically limited in the present disclosure.

After obtaining the square image area surrounding the rectangular area, the contour of the target object in the square image area is segmented, thereby achieving segmentation of the target image frame.

The principle of step 405 is similar to that of step 205, and details are not described herein.

Specifically, step 405 may be determined through the following steps 4051 to 4054.

Step 4051 includes extracting a third feature of the target object in the at least one image frame.

The execution body extracts the high-level feature, low-level feature and/or a feature fusing the high-level feature and the low-level feature of the target object in the at least one image frame preceding the target image frame through the residual neural network ResNet50 as the third feature. The third feature may be, for example, a contour feature, a color feature, a texture feature, a length feature or a category feature.

Step 4052 includes extracting a fourth feature of the target object in the target object area.

After obtaining the square image area in step 405, the execution body extracts the high-level feature, low-level feature and/or a feature fusing the high-level feature and the low-level feature in the square image area surrounding the target object area through the residual neural network ResNet50 as the fourth feature. The fourth feature may be, for example, a contour feature, a color feature, a texture feature, a length feature, an area feature, a volume feature or a category feature.

Step 4053 includes determining in the fourth feature a fifth feature matching the third feature.

The execution body compares the obtained fourth feature with the third feature to determine in the fourth feature the fifth feature matching the third feature. Based on the third feature and the fourth feature listed in step 4052 and step 4053, the fifth feature may be determined to be a contour feature, a color feature, a texture feature, a length feature or a category feature.

Step 4054 includes, based on the fifth feature, segmenting the target image frame.

The fifth feature may be used to represent the contour, color, texture, length or category of the target object, and the execution body may accurately segment the target object in the target image frame based on the indicated contour, color, texture, length or category.

Specifically, the execution body may use the segmentation network of a twin network structure to determine the contour, color, texture, length or category of the target object based on the fifth feature corresponding to the fourth feature in the square image area surrounding the target object area, thereby achieving the accurate segmentation of the target object. The twin network is a network having two branches. A first branch extracts the third feature of the target object in the at least one image frame, and obtains a model parameter corresponding to the twin network based on the third feature. A second branch extracts the fourth feature of the target object in the target object area, extracts the fifth feature matching the third feature in the fourth feature based on the third feature and the corresponding model parameter, and accurately segments the target object in the target image frame based on the fifth feature, thereby improving the accuracy of the segmentation of the target object.

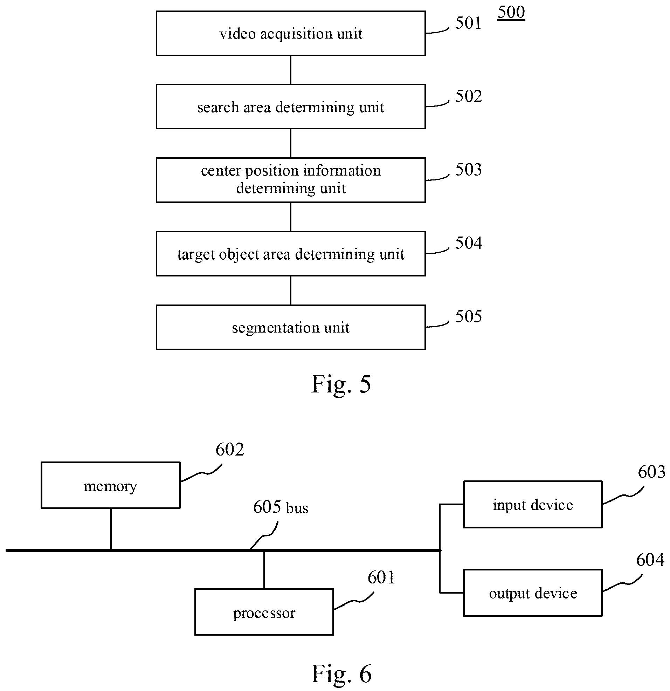

Further referring to Fig. 5, as an implementation of the method shown in each of the above figures, the present disclosure provides an embodiment of an apparatus for processing an image, which corresponds to the method embodiment shown in Fig. 2, and the apparatus may be specifically applicable to various electronic devices.

As shown in Fig. 5, the apparatus 500 for processing the image in this embodiment includes a video acquisition unit 501, a search area determining unit 502, a center position information determining unit 503, a target object area determining unit 504 and a segmentation unit 505.

The video acquisition unit 501 is configured to acquire a target video including a target image frame and at least one image frame of a labeled target object.

The search area determining unit 502 is configured to determine a search area for the target object in the target image frame based on the labeled target object in the at least one image frame.

The center position information determining unit 503 is configured to determine center position information of the target object based on the search area.

The target object area determining unit 504 is configured to determine a target object area based on a labeled area in which the target object is located and the center position information.

The segmentation unit 505 is configured to segment the target image frame based on the target object area.

In some alternative implementations of this embodiment, the search area determining unit 502 is further configured to determine the search area based on the labeled area.

In some alternative implementations of this embodiment, the search area determining unit 502 is further configured to determine an average moving speed of the target object and determine the search area based on position information of the labeled area and the average moving speed.

In some alternative implementations of this embodiment, the center position information determining unit 503 is further configured to extract high-level features of the search area, filter the extracted high-level features, and determine the center position information of the target object based on a filtered feature.

In some alternative implementations of this embodiment, the target object area determining unit 504 is further configured to determine an initial area based on the center position information and the labeled area, determine a first feature of the initial area and a second feature of the labeled area of the at least one image frame, and determine the target object area based on the first feature and the second feature.

In some alternative implementations of this embodiment, the target object area determining unit 504 is further configured to extract a low-level feature and a high-level feature of the initial area and a low-level feature and a high-level feature of the labeled area of the at least one image frame respectively, fuse the low-level feature and the high-level feature of the initial area to obtain the first feature, and fuse the low-level feature and the high-level feature of the labeled area of the at least one image frame to obtain the second feature.

In some alternative implementations of this embodiment, the target object area determining unit 504 is further configured to determine a difference between the first feature and the second feature, update the initial area based on the difference and a preset condition, and use the updated initial area as the target object area.

In some alternative implementations of this embodiment, the segmentation unit 505 is further configured to extract a third feature of the target object in the at least one image frame, extract a fourth feature of the target object in the target object area, determine in the fourth feature a fifth feature matching the third feature, and segment the target image frame based on the fifth feature.

It should be appreciated that the units 501 to 505 described in the apparatus 500 for processing the image correspond to the respective steps in the method described with reference to Fig. 2, respectively. Thus, the operations and features described above with respect to the method for processing the image are equally applicable to the apparatus 500 and the units contained therein, and details are not described herein.

According to an embodiment of the present disclosure, the present disclosure further provides an electronic device and a readable storage medium.

Fig. 6 is a block diagram of an electronic device for processing the image according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 6, the electronic device includes one or more processors 601, a memory 602, and interfaces for connecting components, including high-speed interfaces and low-speed interfaces. The components are interconnected by using different buses 605 and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses 605 and multiple memories may be used with multiple memories, if required. Similarly, multiple electronic devices may be connected, and each of the electronic device provides some of the necessary operations (for example, used as a server array, a set of blade servers or a multiprocessor system). An example of a processor 601 is shown in Fig. 6.

The memory 602 is a non-transitory computer readable storage medium according to the present disclosure. The memory stores instructions executable by at least one processor to cause the at least one processor to execute the method for processing the image according to the present disclosure. The non-transitory computer readable storage medium of the present disclosure stores computer instructions for causing a computer to execute the method for processing the image according to the present disclosure.

As a non-transitory computer readable storage medium, the memory 602 may be used to store non-transitory software programs, non-transitory computer executable programs and modules, such as the program instructions or modules corresponding to the method for processing the image in the embodiment of the present disclosure (such as the video acquisition unit 501, the search area determining unit 502, the center position information determining unit 503, the target object area determining unit 504 and the segmentation unit 505 shown in Fig. 5). The processor 601 runs the non-transitory software programs, instructions and modules stored in the memory 602 to execute various functional applications and data processing of the server, thereby implementing the method for processing the image in the embodiment of the method.

The memory 602 may include a storage program area and a storage data area, where the storage program area may store an operating system and an application program required by at least one function; and the storage data area may store data created by the electronic device when executing the method for processing the image. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for processing the image. Examples of such networks include, but are not limited to, the Internet, enterprise intranets, local area networks, mobile communication networks and combinations thereof.

The electronic device adapted to execute the method for processing the image may further include an input device 603 and an output device 604. The processor 601, the memory 602, the input device 603 and the output device 604 may be interconnected through a bus 605 or other means, and an example of a connection through a bus 605 is shown in Fig. 6.

The input device 603 may receive input number or character information, and generate key signal input related to user settings and functional control of the electronic device adapted to execute the method for processing the image, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN) and the Internet.

The computer system may include a client and a server. The client and the server are generally remote from each other and interact generally through a communication network. The relationship between the client and the server is generated by running the computer programs having a client-server relationship with each other on the corresponding computer.

The technical solutions according to the embodiments of the present disclosure can robustly locate the target object and provide a fine target segmentation result.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

The above specific description is not intended to limit the scope of the present disclosure. It should be appreciated

**EP 3 933 674 A1**

by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

**Claims**

1. A method for processing an image, the method comprising:

    acquiring (201) a target video comprising a target image frame and at least one image frame of a labeled target object;
    determining (202), based on the labeled target object in the at least one image frame, a search area for the target object in the target image frame;
    determining (203), based on the search area, center position information of the target object;
    determining (204), based on a labeled area in which the target object is located and the center position information, a target object area; and
    segmenting (205), based on the target object area, the target image frame.

2. The method according to claim 1, wherein the determining, based on the labeled target object in the at least one image frame, a search area for a target object in the target image frame, comprises:
    determining, based on the labeled area, the search area.

3. The method according to claim 2, wherein the determining, based on a labeled area of the target object in the at least one image frame, the search area, comprises:

    determining (4021) an average moving speed of the target object; and
    determining (4022), based on position information of the labeled area and the average moving speed, the search area.

4. The method according to any one of claims 1 to 3, wherein the determining, based on the search area, center position information of the target object, comprises:

    extracting (4031) a high-level feature of the search area;
    filtering (4032) the extracted high-level feature; and
    determining (4033), based on a filtered feature, the center position information of the target object.

5. The method according to claim 1 or 4, wherein the determining, based on the labeled area of the at least one image frame and the center position information, the target object area, comprises:

    determining (4041), based on the center position information and the labeled area, an initial area;
    determining (4042) a first feature of the initial area and a second feature of the labeled area of the at least one image frame; and
    determining (4043), based on the first feature and the second feature, the target object area.

6. The method according to claim 5, wherein the determining a first feature of the initial area and a second feature of the labeled area of the at least one image frame, comprises:

    extracting (40421) a low-level feature and a high-level feature of the initial area and a low-level feature and a high-level feature of the labeled area of the at least one image frame, respectively;
    fusing (40422) the low-level feature and the high-level feature of the initial area to obtain the first feature; and
    fusing (40423) the low-level feature and the high-level feature of the labeled area of the at least one image frame to obtain the second feature.

7. The method according to claim 5 or 6, wherein the determining, based on the first feature and the second feature, the target object area, comprises:

    determining (40431) a difference between the first feature and the second feature; and
    updating (40432), based on the difference and a preset condition, the initial area, and using the updated initial area as the target object area.

8. The method according to any one of claims 1 to 7, wherein the segmenting, based on the target object area, the target image frame, comprises:

extracting (4051) a third feature of the target object in the at least one image frame;
extracting (4052) a fourth feature of the target object in the target object area;
determining (4053) in the fourth feature a fifth feature matching the third feature; and
segmenting (4054), based on the fifth feature, the target image frame.

9. An apparatus for processing an image, the apparatus comprising: units for performing the method according to any one of claims 1 to 8.

10. An electronic device for processing an image, the electronic device comprising: at least one processor; and a memory communicating with the at least one processor, wherein the memory stores instruction executable by the at least one processor, and the instructions, when executed by the at least one processor, cause the at least one processor to execute the method according to any one of claims 1 to 8.

11. A non-transitory computer readable storage medium storing computer instructions, wherein the computer instructions when executed by a computer cause the computer to execute the method according to any one of claims 1 to 8.

12. A computer program comprising instructions which, when the program is executed by a computer, cause the computer to perform the method according to any one of claims 1 to 8.

Fig. 1

$\underline{200}$

201

acquiring a target video

202

based on the labeled target object in the at least one image frame, determining a search area for the target object in the target image frame

203

based on the search area, determining center position information of the target object

204

based on a labeled area in which the target object is located and the center position information, determining a target object area

205

based on the target object area, segmenting the target image frame

Fig. 2

Fig. 3

400

acquiring a target video ————401

| based on the labeled area, determining the search area |
|---|

4021 ——— determining an average moving speed of the target object

4022 ——— based on position information of the labeled area and the average moving speed, determining the search area ————402

based on the search area, determining center position information of the target object

4031 ——— extracting high-level features of the search area

4032 ——— filtering the extracted high-level features ————403

4033 ——— based on a filtered feature, determining the center position information of the target object

based on the labeled area of the at least one image frame and the center position information, determining the target object area

4041 ——— based on the center position information and the labeled area, determining an initial area

4042 ——— determining a first feature of the initial area and a second feature of the labeled area of the at least one image frame

40421 ——— extracting a low-level feature and a high-level feature of the initial area and a low-level feature and a high-level feature of the labeled area of the at least one image frame, respectively ————404

40422 ——— fusing the low-level feature and the high-level feature of the initial area to obtain the first feature

40423 ——— fusing the low-level feature and the high-level feature of the labeled area of the at least one image frame to obtain the second feature

4043 ——— based on the first feature and the second feature, determining the target object area

40431 ——— determining a difference between the first feature and the second feature

40432 ——— based on the difference and a preset condition, updating the initial area, and using the updated initial area as the target object area

based on the target object area, segmenting the target image frame ————405

4051 ——— extracting a third feature of the target object in the at least one image frame

4052 ——— extracting a fourth feature of the target object in the target object area

4053 ——— determining a fifth feature matching the third feature in the fourth feature

4054 ——— based on the fifth feature, segmenting the target image frame

Fig. 4

500

| | |
|---|---|
| video acquisition unit | 501 |
| search area determining unit | 502 |
| center position information determining unit | 503 |
| target object area determining unit | 504 |
| segmentation unit | 505 |

Fig. 5

602 memory

605 bus

603 input device

601 processor

604 output device

Fig. 6

Europäisches
Patentamt

European
Patent Office

Office européen
des brevets

## EUROPEAN SEARCH REPORT

Application Number

EP 21 16 1716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/074185 A1 (RHODES ANTHONY [US] ET AL) 5 March 2020 (2020-03-05) * abstract * * paragraph [0001] - paragraph [0027] * * paragraph [0055] - paragraph [0063] * ----- | 1-12 | INV. G06K9/00 G06K9/32 G06K9/62 G06T7/20 G06T7/11 G06T7/246 |
| A | US 7 796 781 B2 (IBM [US]) 14 September 2010 (2010-09-14) * abstract * * column 1 - column 8 * * column 10 - column 13 * ----- | 1-12 | |

TECHNICAL FIELDS
SEARCHED       (IPC)

G06K
G06T

The present search report has been drawn up for all claims

| Place of search | Date of completion of the search | Examiner |
|---|---|---|
| The Hague | 21 July 2021 | Karwe, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 1716

21-07-2021

| Patent document cited in search report | | Publication date | Patent family member(s) | | Publication date |
|---|---|---|---|---|---|
| US 2020074185 | A1 | 05-03-2020 | DE 102020125197 | A1 | 12-05-2021 |
| | | | US    2020074185 | A1 | 05-03-2020 |
| US 7796781 | B2 | 14-09-2010 | JP    4366023 | B2 | 18-11-2009 |
| | | | JP 2002281506 | A | 27-09-2002 |
| | | | US 2002159637 | A1 | 31-10-2002 |
| | | | US 2009103810 | A1 | 23-04-2009 |

EPO FORM P0459

For more details about this annex : see Official Journal of the European Patent Office, No. 12/82